# EUROPÄISCHE PATENTSCHRIFT

(11) **EP 1 224 801 B1**
(45) Veröffentlichungstag und Bekanntmachung des Hinweises auf die Patenterteilung: **28.12.2005**
(21) Anmeldenummer: 00967902.8
(22) Anmeldetag: 20.10.2000
(51) Int. Cl.: H04N 5/445

(54) **VERFAHREN UND VORRICHTUNG ZUM ANZEIGEN VON INFORMATIONEN ZU AUSGEWÄHLTEN BILDELEMENTEN VON BILDERN EINER VIDEOSEQUENZ**
METHOD AND DEVICE FOR DISPLAYING INFORMATION WITH RESPECT TO SELECTED IMAGE ELEMENTS OF IMAGES OF A VIDEO SEQUENCE
PROCEDE ET DISPOSITIF SERVANT A AFFICHER DES INFORMATIONS SUR DES ELEMENTS D'IMAGE SELECTIONNES D'IMAGES D'UNE SEQUENCE VIDEO

(30) Priorität: 21.10.1999 DE 19950939; 07.07.2000 DE 10033134
(43) Veröffentlichungstag der Anmeldung: 24.07.2002
(73) Patentinhaber: Knischewski, Frank, 31039 Rheden (DE)
(72) Erfinder: OTTO, Christian, 31141 Hildesheim (DE); KNISCHEWSKI, Frank, 31039 Rheden (DE)
(74) Vertreter: Kunz, Herbert
(86) Internationale Anmeldenummer: PCT/EP2000/010388
(87) Internationale Veröffentlichungsnummer: WO 2001/030071

(56) Entgegenhaltungen:
- EP-A- 0 905 669
- WO-A-96/36007
- WO-A-98/28907
- US-A- 5 929 849
- US-A- 5 929 850

## Beschreibung

Die vorliegende Erfindung betrifft ein Verfahren zum Anzeigen von Informationen zu ausgewählten Bildelementen von Bildern oder einer Videosequenz, ein Aufzeichnungsträger mit einer Videosequenz, mit Informationsdaten und Kriteriendaten zur Ausführung des Verfahrens, eine Vorrichtung zu Aufbereitung von Videosequenzen gemäß dem Oberbegriff des Anspruchs 31 sowie eine Anzeigeneinheit zum Ausführen des Verfahrens.

Von statischen Einzelbildern, insbesondere von Internet-Seiten im HTML-Skript und von fensterorientierten Betriebssystemen und Programmen ist es bekannt, bestimmte Bildelemente mit Informationen zu verknüpfen. Diese Informationen können zum Beispiel Bedienungshilfen oder Verknüpfungen zu anderen Internet-Homepages sein. In der HTML-Programmiersprache werden hierzu die Koordinaten rechteckiger Bildbereiche von Bildelementen definiert und mit Informationen oder einem Link zu weiteren Homepages verknüpft. Wenn das Bildelement auf dem Bildschirm angezeigt ist und der Nutzer mit dem Cursor auf den definierten rechteckigen Bildbereich fährt und diesen auswählt, wird die hinterlegte Information angezeigt oder die mit dem Bildbereich verknüpfte Internet-Seite geladen, d. h. der Link wird ausgeführt.

Aus dem Stand der technik (WO-A-9828907) ist ein Verfahren zum Anzeigen von Informationen zu ausgewählten Bildelementen von Bildern einer Videosequenz bekannt.

Bei der Übertragung von Videosequenzen im Fernsehen, wie z. B. von Sportereignissen, Talkshows oder Serien wird der Zuschauer oftmals mit Werbebotschaften berieselt, die im Hintergrund ablaufen. Hierzu sind z. B. einzelne Gegenstände mit Werbebannem versehen. Weiterhin wird der Zuschauer durch das sogenannte Product Placement auf bestimmte Produkte aufmerksam gemacht, in dem diese wiederholt und deutlich erkennbar in dem Fernsehbeitrag eingesetzt werden. Der Zuschauer wird hierbei massiv mit dem Produkt konfrontiert.

Das Problem der herkömmlichen Werbemethoden ist die ungenügende Werbeerfolgskontrolle. Zudem ist Werbung relativ aufdringlich und stößt auf geringe Akzeptanz des Zuschauers.

Aufgabe der vorliegenden Erfindung ist es deshalb, ein Verfahren zum Anzeigen von Informationen zu ausgewählten Bildelementen einer Videosequenz bzw. eine Vorrichtung zur Aufbereitung von Videosequenzen bereitzustellen, um das interaktive Arbeiten über die Bildinhalte einer Videosequenz zu vereinfachen und zu verbessern.

Ferner ist es eine Aufgabe der Erfindung das Verfahren zum Anzeigen von Informationen zu ausgewählten Bildelementen einer Videosequenz und die Vorrichtung zur Aufbereitung von Videosequenzen so weiterzubilden, dass eine verbesserte Werbung mit Fernsehbeiträgen möglich ist und die Femsehzuschauer interaktiv mit Werbeelementen konfrontiert werden.

Die obengenannten Aufgaben werden verfahrenstechnisch mit dem Merkmalen des Anspruchs 1 und vorrichtungstechnisch mit den Merkmalen des Anspruchs 31 gelöst.

Da erfindungsgemäß die von statischen Bildern grundsätzlich bekannte Methode, definierte Bildbereich mit Informationen zu verknüpfen und diese in einem separaten Fenster auf der Anzeigeeinheit anzuzeigen, sobald das Bildelement mit einem Cursor ausgewählt wurde, auf Videosequenzen mit einer Folge von Lichtbildern übertragen wurde, konnten grundsätzlich neue Möglichkeiten insbesondere im Hinblick auf die Werbung geschaffen werden.

Hierzu wird nicht wie herkömmlich nur die Videosequenz zur Anzeigeeinheit, z. B. ein Fernsehempfänger, übertragen. Zusätzlich werden definierte Informationen zu auszuwählenden Bildelementen übertragen, die nach Auswahl des entsprechenden Bildelementes in einem Fenster darstellbar sind.

Auf diese Weise wird erreicht, dass die herkömmlich vorliegenden Videosequenzen bis zum Endverbraucher unverändert belassen werden können und darüber hinaus der Endverbraucher grundsätzlich die Entscheidungsfreiheit hat, eine Videosequenz, d. h. beispielsweise einen Fernsehfilm, auch ohne eine verfahrenstechnische Bearbeitung der Videosequenz anschauen kann. Je nach Ausgestaltung des erfindungsgemäßen Verfahrens wird somit dem Zuschauer weiterhin die Möglichkeit gegeben, auf herkömmliche Weise seinem Fernsehkonsum nachzugehen. Aufgrund des erfindungsgemäßen Verfahrens ist somit gewährleistet, herkömmliche Fernsehgewohnheiten beizubehalten, andererseits aber das interaktive Bedienen einfach hinzuzuschalten bzw. unproblematisch umzuschalten. Hierzu werden Kriterien zur Verknüpfung eines ausgewählten Bildelementes mit den dazugehörigen Informationen mit der Videosequenz übertragen.

Weitere vorteilhafte Ausgestaltungen der vorliegenden Erfindung sind Gegenstand der Unteransprüche.

Es hat sich gemäß Anspruch 2 als vorteilhaft herausgestellt, wenn die Kriterien zur Verknüpfung eines ausgewählten Bildelementes die Bildkoordinaten des Bildelementes in dem jeweiligen Bild sind, wobei hierzu eine Zuordnungstabelle zur Zuordnung von Informationen zu Bildkoordinaten ausgewählter Bildelemente in den Bildern der Videosequenz in zeitlicher Abhängigkeit von der Videosequenz erstellt wird. Die Daten dieser Zuordnungstabelle werden als Kriterien zur Anzeigeeinheit übertragen. Als weiteren Gesichtspunkt muss allerdings bedacht werden, dass bei der Vorbereitung der Videosequenz zu beachten ist, dass sich die Position der auszuwählenden Bildelemente in der Regel ständig verändert. Hierdurch wird die Festlegung der Verknüpfung der Bildelemente zu den Bildkoordinaten aufwendiger.

In der Regel kann eine Videosequenz vorteilhaft aufbereitet werden, indem eine Zeitspur für die Videosequenz festgelegt wird, ein Bildbereich markiert wird, um ein auszuwählendes Bildelement zu definieren, das Bildelement in den nachfolgenden Bildern z. B. mit Hilfe von bekannten Mustererkennungsverfahren gesucht wird und die Bildkoordinaten oder die Verschiebungsvektoren der Bildbereiche des Bildelementes in den Bildern der Videosequenz, die entsprechenden Zeitinformationen der Zeitspur und die zu den Bildelementen zugehörigen Informationen abgespeichert werden. Durch das Festlegen der Zeitspur ist eine eindeutige Zuordnung der Bildkoordinaten zu den entsprechenden Bildem möglich. Hierbei ist zu berücksichtigen, dass die von Fernsehsendern herkömmlich verwendeten Videosequenzen oftmals analog sind und die in einer davon unabhängigen Datenbank abgespeicherten Bildkoordinaten später nicht mehr den einzelnen Bildern zugeordnet werden können, sofern die Videosequenz nicht entsprechend markiert ist.

Die zu übertragende Datenmenge zur Zuordnung der Informationen zu den Bildkoordinaten auszuwählender Bildelemente kann vorteilhaft dadurch reduziert werden, dass der Verlauf der Bildkoordinaten eines Bildelementes als mathematische Näherungsfunktion beschrieben wird, die als Kriterium übertragen wird. Die Bildkoordinaten können hierfür als Funktion des Raumes mit den Koordinaten x und y über die Zeit z. B. mit Hilfe von Spline-Funktionen beschrieben werden. In diesem Falle müssen nur noch die Parameter der Näherungsfunktion übertragen werden.

Vorteilhafterweise werden die Zeitinformation der Zeitspur synchron zur Videosequenz und die Bildkoordinaten und zugehörigen Informationen asynchron übertragen. Allerdings ist es erforderlich die zu einer Videosequenz zugehörigen Kriterien regelmäßig zu übertragen, um Zuordnungsfehler zu vermeiden, die durch einen Senderwechsel entstehen. Oftmals "zappt" der Nutzer in schneller Folge durch die einzelnen Sender, so dass eine falsche oder keine Zuordnung zu Bildelementen möglich ist, sofern die Kriterien nicht regelmäßig aktualisiert werden.

Alternativ zur Übertragung von Bildkoordinaten als Kriterium zur Zuordnung von Bildelementen zu Informationen ist es auch möglich, die auszuwählenden Bildelemente mit den zugehörigen Informationen an die Anzeigeeinheit zu übertragen. Sobald ein Bildelement ausgewählt wurde, wird dieses mit den übertragenen und abgespeicherten Bildelementen verglichen, die auswählbar sind und denen eine Information zugeordnet ist. Der Vergleich kann z. B. mit Hilfe von bekannten Mustererkennungsverfahren erfolgen, die in der Anzeigeeinheit ausgeführt werden.

Vorteilhafterweise wird zum Anzeigen der Information ein Fenster über die Videosequenz auf der Anzeigeeinheit überlagert.

Es ist besonders vorteilhaft, wenn die Informationen interaktive Elemente beinhalten, so dass Daten von der Anzeigeeinheit zu einem Zielcomputer übertragen werden, nachdem ein Bildelement aus den Bildern der Videosequenz auf der Anzeigeeinheit ausgewählt wurde. Die Daten und/oder der Zielcomputer sind hierbei von der Information abhängig, die zu dem ausgewählten Bildelement gehört. Die interaktive Information kann z. B. in der Art eines Internet-Links gestaltet werden. In dem Informationsfenster können vorteilhafterweise Eingabeelemente vorgesehen sein, in die der Nutzer nach Einblenden des Informationsfensters auf der Anzeigeeinheit weitere Daten, wie z. B. seine Adresse und Bestellinformationen für ein zu dem Bildelement zugehöriges Produkt eingeben kann. Diese Daten werden dann an den Zielcomputer übermittelt und z. B. eine Bestellung ausgeführt. Auf diese Weise ist es möglich, Videosequenzen als Werbeträger zu verwenden und mit Hilfe der Interaktion eine Werbeerfolgskontrolle durchzuführen und ein Bestellsystem bereitzuhalten.

Die Datenübertragung zu dem Zielcomputer kann vorteilhafterweise über ein Breitbandnetz, ein Stromnetz, ein Telefonnetz oder über ein Funk- und Satellitennetz oder ähnliches erfolgen.

Die Kriterien zur Verknüpfung eines ausgewählten Bildelementes mit den zugehörigen Informationen werden vorteilhafterweise in der Austastlücke des Signals der Videosequenzen übertragen.

Bei der Übertragung der Videosequenz als digitaler Datenstrom ist für die Kriterien und die Informationen ein definierter Bereich des Datenstrom vorgesehen. Für einen komprimierten Datenstrom nach dem MPEG-2-Standard können Datenbereiche genutzt werden, die für zusätzliche anwenderspezifische Funktionen freigehalten sind.

Zur Ausführung des Verfahrens sind auf den herkömmlichen bekannten Aufzeichnungsträgern Informationsdaten zu ausgewählten Bildelementen von Bildern der Videosequenz und Daten als Kriterien zur Verknüpfung eines ausgewählten Bildelementes mit den zugehörigen Informationen abgespeichert.

Wird ein ausgewähltes Bildelement zusätzlich als sogenanntes zusätzliches Bildelement der Anzeigeneinheit übermittelt, d. h. der Anzeigeneinheit stehen ein ausgewähltes Bildelement zweifach zur Verfügung, so wird vorteilhaft erreicht, dass dem Benutzer optisch vermittelt wird, welches Bildelement mit einer Information hinterlegt ist und er das Anzeigen der Information über das zusätzliche Bildelement durchführen kann. Auf diese Weise kann der Benutzer die Videosequenz unverändert verfolgen und erst bei Bedarf gegebenenfalls die auszuwählenden Bildelemente in die Anzeigeneinheit aufrufen, d. h. das zusätzliche Bildelement auf den Bildschirm bringen, wodurch ihm signalisiert wird, welche Bildelemente mit Informationen hinterlegt sind.

Damit dem Benutzer optisch eine gewisse Struktur bzw. Ordnung an die Hand gegeben wird, ist es von Vorteil, wenn die zusätzlichen Bildelemente bzw. ein zusätzliches Bildelement in Form einer Iconleiste an einer vorbestimmten Position auf dem Bildschirm zur Verfügung gestellt wird. Damit der Benutzer seinen üblichen Fernsehgewohnheiten nachkommen kann, wird das zusätzliche Bildelement nur bei Bedarf eingeblendet.

Damit dem Benutzer überhaupt signalisiert wird, es existieren in der von ihm betrachteten Videosequenz ausgewählte Bildelemente, welche mit einer Information hinterlegt sind, ist es von Vorteil, wenn diese Möglichkeit der Einblendung vorteilhafterweise am Rand der Anzeigeneinheit bzw. des Bildschirmes mittels einer separaten Hinweismarkierung, welche beispielsweise ein Balken bzw. ein für den Benutzer speziell konfiguriertes Zeichen sein kann, auf der Anzeigeneinheit dargestellt wird.

So sollte es der Benutzer jedoch vorziehen, die Videosequenz mit markierten ausgewählten Bildelementen zu betrachten, so kann es von Vorteil sein, wenn der Benutzer eigenständig beispielsweise über die zusätzlichen Bildelemente festlegen kann, welche Bildelemente in der Videosequenz als ausgewählte Bildelemente dargestellt werden soll. Beispielsweise könnte der Benutzer festlegen, dass er aufgrund seines technischen Interesses lediglich technische Geräte, für die eine Information hinterlegt sind, als zusätzliches Bildelement festzulegen, so dass ihm dann durch die Markierung in der Videosequenz erkennbar wird, welches der technischen Geräte in der Videosequenz mit einer Information hinterlegt wird.

Es hat sich als vorteilhaft erwiesen, wenn die zusätzlichen Bildelemente nach einer bestimmten Ordnung beispielsweise der Reihe nach dargestellt werden und das Anzeigen der Informationen über eine entsprechende Nummereingabe, welche der sequenziellen Darstellung entspricht, erfolgt.

Sollte es einem Benutzer grundsätzlich missfallen, zu viele Bildelemente auf der Anzeigenvorrichtung bzw. einem Fernsehbildschirm dargestellt zu bekommen, ist es gemäss Anspruch 19 von Vorteil, wenn lediglich ein Signalelement zu jedem ausgewählten Bildelement vorgesehen ist welches beispielsweise dem ausgewählten Bildelement auf der Videosequenz folgen kann. Mit dieser Maßnahme wird dem Benutzer somit signalisiert, dass ein Bildelement auswählbar ist und aufgrund der Stellung des Signalelements eindeutig festgelegt wird, welches Bildelement mit einer Information hinterlegt ist. Aufgrund allgemeiner Gewohnheiten hat es sich als vorteilhaft erwiesen, wenn der bestimmte Ort vorzugsweise rechts oberhalb des ausgewählten Bildelementes festgelegt wird. An dieser Stelle sei jedoch darauf hingewiesen, dass jede Zuordnung des Signalelements zu dem ausgewählten Bildelement denkbar ist.

Wird darüber hinaus das Signalelement gemäss Anspruch 21 mit einem Hinweiszeichen, beispielsweise numerischer Zahl oder einem Buchstaben versehen, so kann der Benutzer beispielsweise durch Drücken der entsprechenden Nummer die Auswahl des ausgewählten Bildelementes treffen, um die Anzeige der Information abzurufen.

Wird gemäß Anspruch 22 die Hinweismarkierung mit dem Signalelement über eine Verbindungslinie verbunden, so wird auf diese Weise dem Benutzer eindeutig erkennbar gemacht, dass nunmehr das mit dem Signalelement verbundene ausgewählte Bildelement mit Informationen hinterlegt wird. Diese Darstellung kann jedoch lediglich für eine bestimmte Zeit erfolgen, vorzugsweise eine Sekunde, um somit der Ablauf der Videosequenz als solche nicht grundsätzlich zu stören. Mit dieser Maßnahme wird ferner erreicht, dem Benutzer die Möglichkeit zu verdeutlichen, dass in der speziellen Videosequenz mit Informationen hinterlegte ausgewählte Bildelemente vorhanden sind.

Mit der Möglichkeit, die Hinweismarkierung nur dann zu aktivieren, wenn ein ausgewähltes Bildelement in der Videosequenz vorhanden ist, wird dem Benutzer ermöglicht auf einfache Weise erkennen können, wann er Informationen zu einem ausgewählten Bildelement abfragen kann.

Eine weitere Möglichkeit, dem Benutzer während des Ablaufes von Videosequenzen anzuzeigen, wann er Informationen erhalten kann, besteht beispielsweise in einer pulsierenden und/oder blickenden Hinweismarkierung. Insbesondere hat eine pulsierende und/oder blinkende Hinweismarkierung den Vorteil, dass immer dann wenn weitere neue ausgewählte Bildelemente bei der Darstellung einer Videosequenz hinzukommen, die bereits für vorhandene ausgewählte Bildelement existierende Hinweismarkierung anfängt zu blicken bzw. zu pulsieren.

Wird das Verfahren gemäß Anspruch 25 in unterschiedlichen Moden unterteilt, so sind unterschiedliche Aktionen innerhalb der einzelnen Moden möglich. Gemäß Anspruch 25 kann ein erster Mode zum Anzeigen des Signalelementes vorgesehen sein, mit dem von dem normalen Darstellen der Videosequenz, d. h. Darstellung eines Filmes, in den Aktivierungsmode umgeschaltet werden kann, sofern ein ausgewähltes Bildelement in der Videosequenz vorhanden ist. Als Unterschied zur ersten Mode kann ein zweiter Mode vorgesehen sein, welcher zum Anzeigen einer ersten Information in Bezug auf die ausgewählten Bildelemente verwendet wird. Auf diese Weise kann sich der Benutzer im zweiten Mode einen Überblick über die hinterlegten Informationen bzgl. eines ausgewählten Bildelementes machen.

Wird gemäß Anspruch 27 im zweiten Mode alle ausgewählten Bildelemente einer zum Zeitpunkt der Aktivierung des zweiten Mode vorhandene Videosequenz dargestellt, so erhält der Benutzer direkt und auf einfache Weise eine Gesamtübersicht der mit Informationen hinterlegten ausgewählten Bildelemente.

Sollte der Benutzer an einem ausgewählten Bildelement größeres Interesse haben, so kann mittels einem dritten Mode detailliertere zweite Informationen zu dem ausgewählten Bildelement aufgerufen und dargestellt werden.

Erfolgt gemäß Anspruch 29 die Aktivierung des ersten, zweiten und/oder dritten Modes bzw. jedes weiteren vorhandenen Modes durch zeitlich bedingtes und/oder unterschiedliches Betätigen von Aktionstasten, so wird ein größtmöglicher Komfort dem Benutzer an die Hand gegeben, insbesondere dann, wenn er die Aktionstasten betätigen muss, die er normalerweise beim Darstellen der Videosequenzen, d. h. beim Fernsehschauen, ebenfalls verwendet.

Eine Vorrichtung zur Aufbereitung von Videosequenzen zum Ermöglichen, Informationen zu ausgewählten Bildelementen von Bildern der Videosequenz anzuzeigen, hat vorteilhafterweise eine Wiedergabeeinheit zum Wiedergeben und Anzeigen der Videosequenz, eine Erfassungseinheit zum Auswählen und Erfassen von Bildelementen von Bildern der Videosequenz, eine Erkennungseinheit zum Erkennen der ausgewählten Bildelemente in nachfolgenden Bildern der Videosequenz und zum Bestimmen der jeweiligen Bildkoordinaten der Bildelemente und eine Aufzeichnungseinheit zum Abspeichern von Informationen zu ausgewählten Bildelementen und von Kriterien für die spätere Verknüpfung von Bildkoordinaten ausgewählter Bildelemente mit Informationen.

Die Anzeigeeinheit hat vorzugsweise eine Datenverarbeitungseinheit zur Ausführung des erfindungsgemäßen Verfahrens. Als Datenverarbeitungseinheit kann z.B. eine Set-Top-Box verwendet werden, die vorteilhafterweise einen Internetzugang ermöglicht.

Die Erfindung wird nachfolgend anhand der beigefügten Zeichnungen näher erläutert.

Es zeigen:
- Fig. 1 -: ein Ablaufdiagramm einer ersten Ausführungsform für das Aufbereiten von Videosequenzen zur Durchführung des Verfahrens;
- Fig. 2 -: ein schematisches Blockdiagramm eines Systems zur Durchführung des Verfahrens.
- Fig. 3 -: zeigt in einer zweiten Ausführungsform ein für den Benutzer erscheinendes Bild auf der Anzeigeeinheit;
- Fig. 4 -: zeigt in einer dritten Ausführungsform ein für den Benutzer erscheinendes Bild auf der Anzeigeeinheit;
- Fig.5 -: zeigt in einer vierten Ausführungsform ein für den Benutzer erscheinendes Bild auf der Anzeigeeinheit;
- Fig. 6 -: zeigt ein schematisches Blockdiagramm einer Vorrichtung zur Durchführung des Verfahrens gemäß einer fünften Ausführungsform;
- Fig. 7 -: zeigt schematisch den Übergang zwischen dem normalen Betriebsmodus und dem ersten Mode gemäß der fünften Ausführungsform;
- Fig. 8 -: zeigt den Übergang zwischen dem ersten Mode und dem zweiten Mode gemäß der fünften Ausführungsform;
- Fig. 9 -: zeigt schematisch die Betriebsweise des zweiten Modes;
- Fig. 10 -: zeigt exemplarisch die mögliche Darstellungsform der ersten Informationen im zweiten Mode gemäß fünfter Ausführungsform;
- Fig. 11 -: zeigt schematisch die Betriebsweise des dritten Modes;
- Fig. 12 -: zeigt exemplarisch im dritten Mode zweite detailliertere Informationen;
- Fig. 13 -: zeigt schematisch die Betriebsweise des dritten Modes.

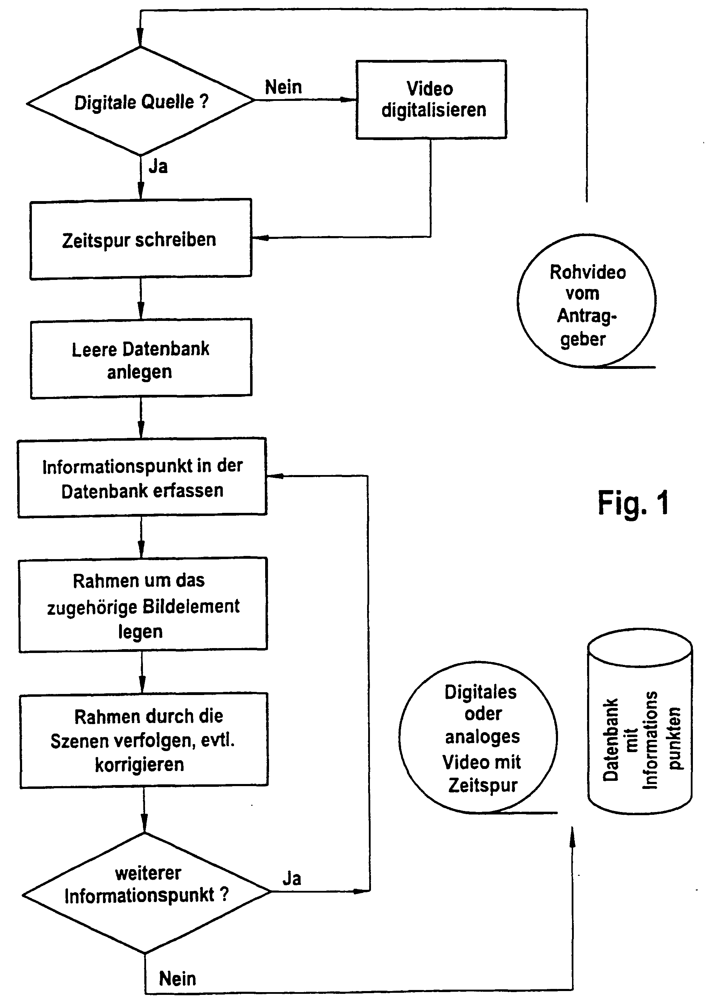

Die Fig. 1 lässt ein Flussdiagramm zur Aufbereitung von Videosequenzen zur Durchführung des erfindungsgemäßen Verfahrens erkennen. Eine Rohvideosequenz von einem Auftraggeber wird zunächst digitalisiert, sofern es als analoge Videosequenz vorliegt. Anschließend wird eine Zeitspur auf die Videosequenz geschrieben, um eine spätere Zuordnung und Auswahl von Bildelementen in Abhängigkeit von der Zeit zu ermöglichen. Anschließend wird eine leere Datenbank angelegt und es werden Informationspunkte in der Datenbank erfasst. Hierzu wird ein Rahmen um auszuwählende Bildelemente gelegt, die mit bestimmten Informationen verknüpft werden sollen. Der Rahmen bzw. das Bildelement wird in dieser Ausführungsform durch die Szenen der Videosequenz verfolgt und die zugehörigen Bildkoordinaten werden in Abhängigkeit von der Zeitspur abgespeichert. Es ist vorteilhaft, wenn lediglich die Änderungen der Bildkoordinaten abgespeichert werden. Hierdurch kann Speicherplatz eingespart werden. Das Erfassen von Informationen in der Datenbank und das Bestimmen der zugehörigen Bildkoordinaten erfolgt hintereinander für jeden zu erfassenden Informationspunkt.

Auf diese Weise wurde eine digitale oder analoge Videosequenz mit einer Zeitspur und eine damit verknüpfte Datenbank mit Informationen und Bildkoordinaten, die in Abhängigkeit von der Zeitspur abgespeichert sind, geschaffen. Die Videosequenz wird synchron mit der Zeitspur an eine Anzeigeeinheit, wie z.B. ein Fernsehgerät übertragen. Asynchron hierzu wird z.B. in der Austastlücke des Fernsehsignals die Daten der Datenbank übertragen. Beim Abspielen der solchermaßen aufbereiteten Videosequenz im Fernseher kann der Nutzer Bildelemente mit einem Cursor vorzugsweise mausgesteuert auswählen. Die Bildkoordinaten des ausgewählten Bildelementes werden mit den übertragenen Bildkoordinaten verglichen und es werden die entsprechenden Informationen angezeigt, wenn die Bildkoordinaten mit denen eines Bildelementes übereinstimmen, für das Informationen hinterlegt worden sind. Hierzu wird ein Fenster auf dem Bildschirm geöffnet und die Informationen der angezeigten Videosequenz überlagert. Auf diese Weise ist es möglich, Hintergrundinformationen zu Videosequenzen zu übertragen und anzuzeigen. Zudem können Werbebotschaften und Bestellmöglichkeiten interaktiv durch den Nutzer aufgerufen werden.

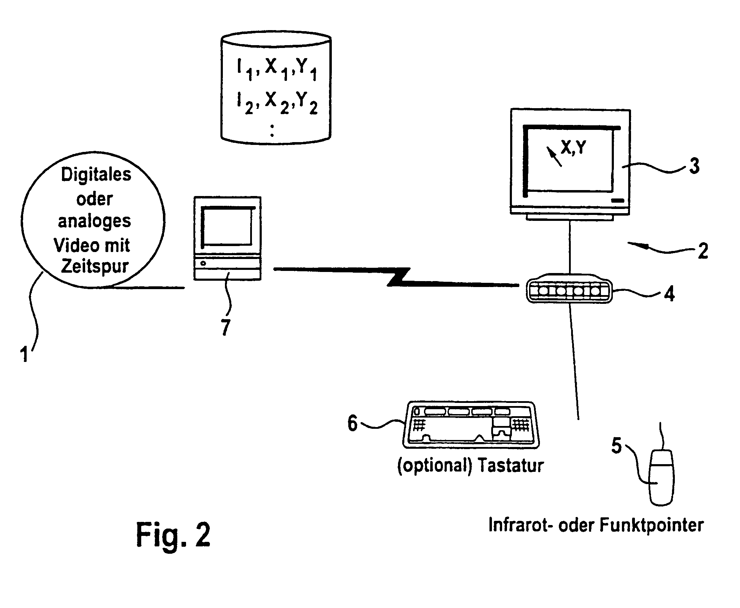

Das Verfahren gemäß erster Ausführungsform wird anhand des in der Fig. 2 skizzierten Blockdiagramms eines Systems zur Ausführung des Verfahrens näher erläutert. Die digitale oder analoge Videosequenz 1 mit der Zeitspur wird zu einer Anzeigeeinheit 2 übertragen, die aus einem Femseher 3 und einer Datenverarbeitungseinheit 4 besteht. Die Zeitinformation wird im unsichtbaren Übertragungsbereich synchron zum Fernsehsignal übertragen. Zusätzlich werden Informationen Ii zu auszuwählenden Bildelementen sowie die zugehörigen Bildkoordinaten Xi, Yi asynchron zum Fernsehsignal an die Datenverarbeitungseinheit 4 der Anzeigeeinheit übertragen und dort abgespeichert. Mit Hilfe einer Maus, eines Infrarot- oder Funkpointers 5, einer Tastatur 6 oder ähnliches kann der Nutzer Bildelemente auf dem Bildschirm des Fernsehers 3 auswählen. Die zugehörigen Bildkoordinaten werden an die Datenverarbeitungseinheit 4 übertragen und dort mit den abgespeicherten Bildkoordinaten Xi, Yi der auszuwählenden Bildelemente verglichen. Wenn sich die Bildkoordinaten im Bildbereich auszuwählender Bildelemente befinden, wird die damit verknüpfte Information Ii in einem separaten Fenster auf dem Bildschirm angezeigt. Sofern diese Information Ii mit einem Link verbunden ist und eine Interaktion gestartet wurde, wird durch die Datenverarbeitungseinheit 4 eine Verbindung zu einem Zielcomputer 7 in einer Zentrale aufgebaut und zu der Information Ii zugehörige Daten z.B. zur Werbeerfolgskontrolle, zur Bestellabwicklung etc. an den Zentralcomputer übertragen. Vorteilhafterweise wird hierzu das Internet verwendet. Die Datenverarbeitungseinheit 4 kann hierbei eine sogenannte Set-Top-Box oder ähnliches sein.

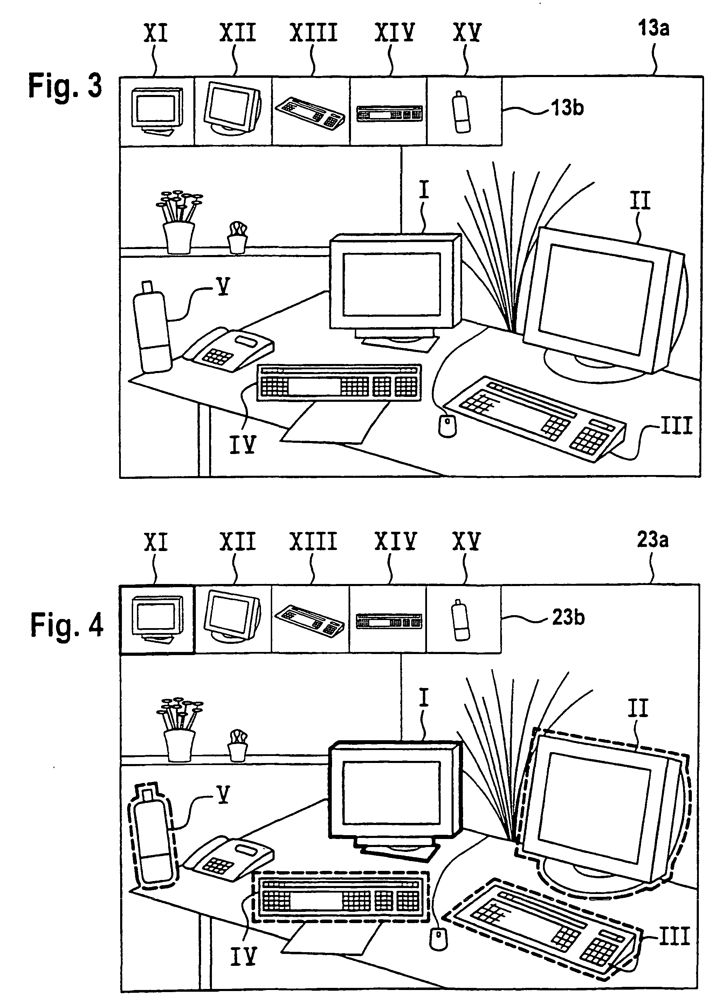

In Fig. 3 ist ein dem Benutzer erscheinendes Gesamtbild 13a beispielsweise der Anzeigeeinheit 3 aus Fig. 2 dargestellt, wie es gemäß einer zweiten Ausführungsform erscheinen kann. Das Gesamtbild 13a zeigt eine Videosequenz mit einer Vielzahl von Bildelementen, wobei in diesem Beispiel insgesamt fünf ausgewählte Bildelemente I, II, III, IV und V vorhanden sind. An eine geeigneten Position auf dem Anzeigebild 13a ist eine Iconleiste 13b vorgesehen, in der die ausgewählten Bildelemente I, II, III, IV und V als zusätzliche Bildelemente XI, XII, XIII, IX und XV dargestellt sind. Aufgrund dieser Zuordnung wird dem Benutzer über die zusätzlichen Bildelemente XI, XII, XIII, IX und XV signalisiert, welche der in der Videosequenz auftretenden ausgewählten Bildelemente I, II, III, IV und V auswählbar sind, um die hinterlegten Informationen anzuzeigen. An dieser Stelle sei hervorgehoben, dass die Iconleiste auch eingeblendet werden kann und insbesondere diese Einblendmöglichkeit über ein beispielsweise spezielles Anfahren über eine Maus oder Handbedienungselement eingeblendet werden kann. An dieser Darstellung wird auch deutlich, das beispielsweise der Benutzer, wollte er die Information zu den zusätzlichen Bildelement XIII erfahren, aufgrund der Position 3 in der Iconleiste er durch Drücken der Nr. 3 beispielsweise auf der Fernbedienung die hinterlegte Information abrufen kann, welche dann beispielsweise als überlagertes Fenster ebenfalls auf der Anzeigeeinheit darstellbar ist (nicht gezeigt). Das in dieser zweiten Ausführungsform zugrundeliegende Prinzip besteht darin, dass während der Audio- Videoübertragung eine Iconleiste 13b mit den zusätzlichen Bildelementen XI, XII, XIII, IX und XV als der zur Auswahl stehenden Bildelemente eingeblendet wird. Diese Iconleiste kann nun unter Zuhilfenahme einer Eingabevorrichtung, (beispielsweise Maus, Cursortaste, Steuerpad, Fembedienungselemente, Funkpointer, etc) das zusätzliche Bildelement ausgewählt werden und von der Auswahl einer Aktion, beispielsweise Bestellung, Infos anfordern usw., abhängig machen, das heißt eine entsprechende Information anzeigen. Zur Verwirklichung dieses Konzepts muss lediglich das zusätzliche Bildelement übertragen werden und den Zeitpunkt, in dem dieses zusätzliche Bildelement, das heißt mittels der zu der Videosequenz zugehörige Zeitspur, zu sehen sind. Eine Übertragung beispielsweise der Bildkoordinaten ausgewählter Bildelemente in den Bildern der Videosequenz, die im Zusammenhang mit den Bildelementen der Bildübertragung stehen, ist somit nicht erforderlich, und es müssen keine sogenannten Hot Spots übertragen werden.

In Fig. 4 ist eine dritte Ausführungsform der vorliegenden Erfindung dargestellt, welche im Wesentlichen die gleiche Darstellungsmechanik für die ausgewählten Bildelemente wie in der zweiten Ausführungsform verwendet. Gezeigt ist ein Anzeigebild 23a, welches ebenfalls ausgewählte Bildelemente I, II, III, IV, V und eine Iconleiste 23b mit den zusätzlichen Bildelementen XI, XII, XIII; XIV, XV darstellt. Gegenüber der zweiten Ausführungsform werden jetzt die ausgewählten Bildelemente I bis V mit einer Markierung in Form eines Selektionsrahmen versehen, damit der Benutzer zusätzlich zu der Iconleiste 23b in dem Anzeigenbild erkennen kann, welches Bildelement aktiviert bzw. mit einer Information hinterlegt ist. Darüber hinaus ist es möglich, das aktuell auswählbare ausgewählte Bildelement beispielsweise I mit einem gegenüber den anderen ausgewählten Bildelement mit einem anderen Selektionsrahmen zu versehen, beispielsweise dickere Rahmenkontur oder andere Farbgestaltung, wobei gleichzeitig in der Iconleiste 23b das entsprechende zusätzliche Bildelement, hier XI, ebenfalls gegenüber den anderen zusätzlichen Bildelementen II bis V optisch hervorgehoben wird. Aufgrund dieser Hervorhebung wird gewährleistet, dass der Benutzer lediglich mit einer allgemein definierten Eingabetaste, beispielsweise "OK"-Taste auf der Fernbedienung, die zu dem ausgewählten bzw. zusätzlichen Bildelement hinterlegte Information abrufen kann. Für dieses Verfahren müssen zwar zusätzlich die Rahmen für die ausgewählten Bildelemente und deren Koordinaten übertragen werden, allerdings werden erneut keine sogenannten "Hot-Spots" übertragen oder von diesen irgendwelche Aktionen abhängig gemacht. Werden die zusätzlichen Bildelemente entsprechend der in Figur 4 dargestellten Iconleiste wiedergegeben, so kann beispielsweise der Benutzer mit einer entsprechenden "Rechts-Links"-Taste lediglich in der Iconleiste sein für sich interessantes zusätzliches Bildelement anwählen und entsprechend mit der allgemeinen Eingabetaste abrufen. Die Aktivierung der ausgewählten Bildelemente erfolgt somit nicht über sogenannte Hot-Spots sondern lediglich über die zusätzlichen Bildelemente XI bis XV.

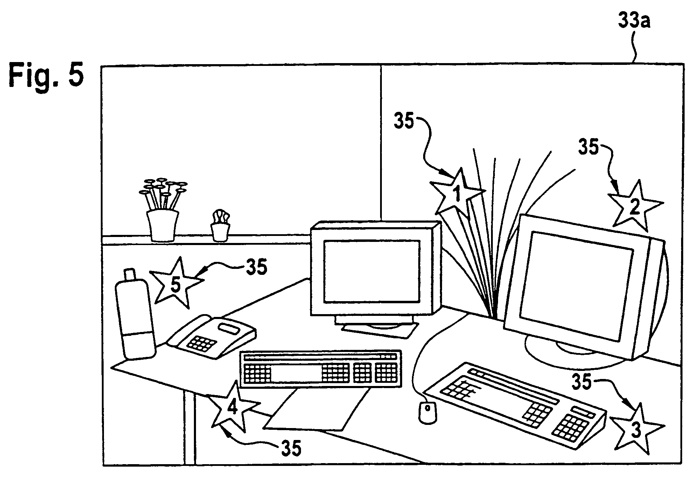

In Figur 5 ist eine vierte Ausführungsform der vorliegenden Erfindung dargestellt. In dieser Ausführungsform ist wiederum ein Anzeigebild der Anzeigeeinheit 3 dargestellt, in der wiederum ausgewählte Bildelemente I bis V zu sehen sind. In dieser Ausführungsform ist ein Signalelement 35 für jedes ausgewählte Bildelement I bis IV vorgesehen, wobei jedes Signalelement 35 mit einem Hinweiszeichen beispielsweise Nummer oder Buchstaben versehen ist, welche direkt angewählt werden kann, wodurch dann durch Drücken der entsprechenden Nummer oder des Buchstabens die zu diesem ausgewählten Bildelement hinterlegte Information angezeigt wird. Für dieses Verfahren müssen lediglich die Koordinaten der Signalelemente übertragen werden, welche beispielsweise in Abhängigkeit von den Bildkoordinaten der ausgewählten Bildelemente sein können. Das Anzeigen der Information, welche zu dem ausgewählten Bildelement zugeordnet ist, wird somit durch Aktivieren einer separaten Eingabevorrichtung abhängig gemacht und es wird erneut kein sogenannter "Hot-Spot" verwendet. An dieser Stelle soll hervorgehoben werden, dass die optische Aufbereitung für den Benutzer des momentan auszuwählenden Signalelements ähnlich wie in der dritten Ausführungsform durch Hervorhebung, d. h. eventuell durch unterschiedlichen Einfassungsrand bzw. Farbgebung abgehoben werden kann.

Ferner soll hervorgehoben werden, dass die jeweiligen Verfahren der ersten bis vierten Ausführungsform auch gleichzeitig eingesetzt und kombiniert werden können, so dass eine vielfältige Darstellungsmöglichkeit für den Benutzer vorhanden ist.

Im Anschluss an die dritte Ausführmgsform, bei der die ausgewählten Bildelemente mit einem Selektionsrahmen versehen sind, soll an dieser Stelle hervorgehoben werden, dass sogenannte transparente GIF-Bildformate separat an die Anzeigeneinheit übertragen werden können, die exakt so groß wie das Anzeigebild 13a bis 33a sein können und den Selektionsrahmen für das ausgewählte Bildelement an einer geeigneten Stelle bzw. vorgegebenen Koordinaten haben. Auf diese Weise ist es möglich, die Übertragung der Bildkoordinaten einzusparen, so dass lediglich über die dem Bildformat zugeordnete Zeitspur und entsprechenden ausgewählten Bildelement die Anzeige der Information ermöglicht wird.

Das erfindungsgemäße Verfahren und die erfindungsgemäße Vorrichtung ermöglicht somit ein Product Placement von Beiträgen mit aktiver Werbeerfolgskontrolle. Zudem kann eine Information für ein Bildelement mit einem Link verknüpft werden, so dass nach Auswahl des Bildelementes eine Bestellung des in dem Bild der Videosequenz dargestellten Produktes mittels Datenübertragung online möglich ist.

Wenn dem Nutzer ein Produkt gefällt, das in der Videosequenz dargestellt wird, wie z.B. ein Kleidungsstück, kann dieser das Produkt mit Hilfe der Maus auswählen und erhält zu dem Produkt gehörige Informationen, wie z.B. der Name und die Adresse des Vertreibers, der Preis, die Qualität etc.. Nun ist ein weiteres Informationsfeld auswählbar, das es dem Nutzer ermöglicht, Bestelldaten einzugeben und das Produkt direkt bei dem Bertreiber zu bestellen. Hierzu werden die Bestellinformationen über einen Rückkanal, z.B. über ein Breitband-, das Strom-, ein Funk- oder Satellitennetz oder mit Hilfe einer Telefonverbindung, zu dem Vertreiber übertragen, der den Versand und die Rechnungsstellung für das Produkt veranlasst.

Auf diese Weise ist eine sehr unauffällige Werbung möglich, die sich zudem noch die Neugier des Zuschauers zunutze macht. Zudem ist eine Werbeerfolgskontrolle auch für das Product Placement möglich.

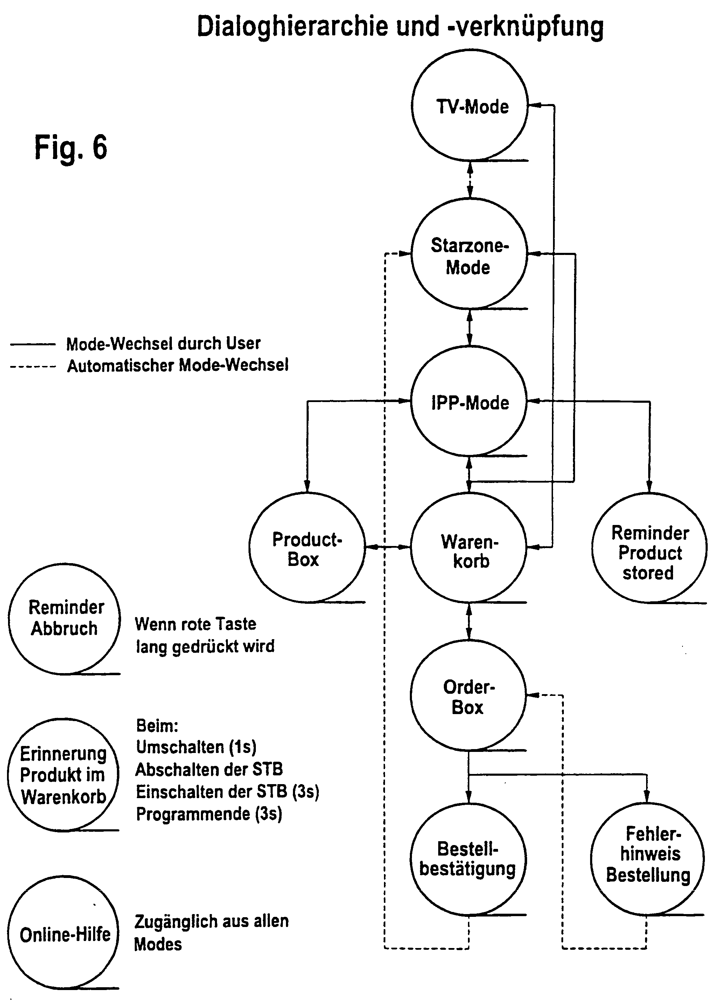

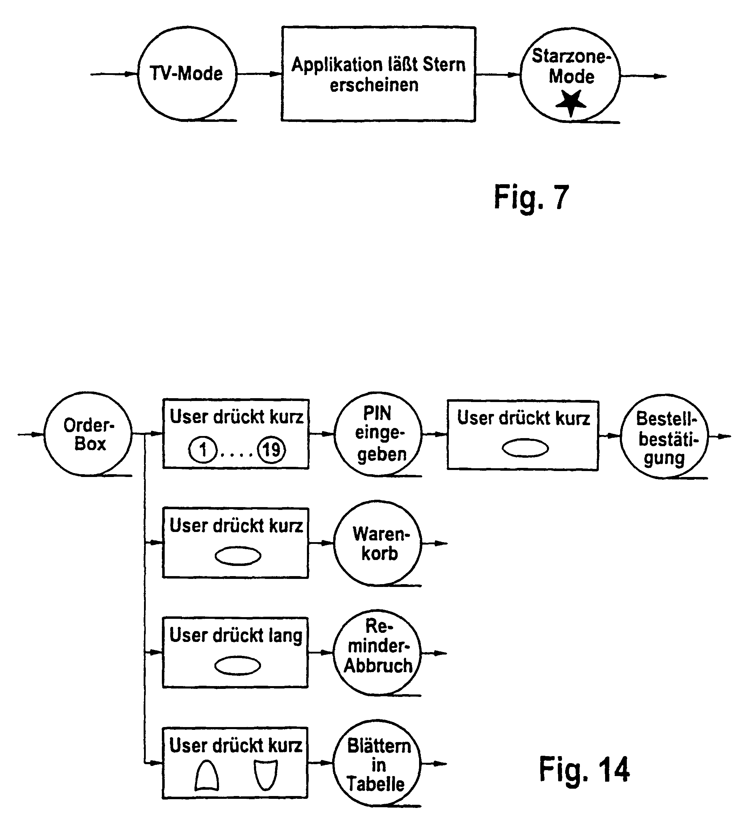

Abschließend soll die Funktionsweise des erfindungsgemäßen Verfahrens bzw. der erfindungsgemäßen Vorrichtung entsprechend der fünften Ausführungsform deutlicher unte Zuhilfenahme der Figuren 6 bis 13 dargestellt werden. Wie in Fig. 6 dargestellt ist, verwendet das erfindungsgemäße Verfahren bzw. die erfindungsgemäße Vorrichtung unterschiedliche Moden, wobei von einem allgemeinen Betriebsmodus, d. h. TV-Modus in einen weiteren Mode übergegangen werden kann, welcher die Hinweismarkierung beispielsweise in Form eines Sterns, den sogenannten Starzone-Mode (siehe auch Fig. 7) aktiviert. Je nach Betätigen einer Aktionstaste besteht nunmehr die Möglichkeit, von dem Starzone-Mode in den ersten Mode, d. h. IPP-Mode, überzuwechseln, bei dem das Signalelement zu einem ausgewählten Bildelement aktiviert wird. Von dem ersten Mode, d. h. IPP-Mode, kann nunmehr ebenfalls durch Betätigung einer Aktionstaste oder anderweitigen Aktionsmaßnahme, in einen zweiten Mode, welcher beispielsweise einen Warenkorb beinhaltet, übergegangen werden. Darüber hinaus besteht ebenso die Möglichkeit direkt von dem ersten Mode in einen dritten Mode überzuwechseln, welcher detailliertere Informationen zu dem ausgewählten Bildelement anzeigt. Es ist jedoch nicht ausgeschlossen, ebenfalls vom zweiten Mode in den dritten Mode überzugehen. Wie in Fig. 6 deutlich dargestellt ist, besteht ebenso die Möglichkeit durch eine spezielle Betätigungsmaßnahme von dem Betriebsmodus, d. h. TV-Mode und/oder von dem Starzone-Mode direkt in den Warenkorb des zweiten Modes zu gelangen. Es hat sich als vorteilhaft herausgestellt, wenn von dem Warenkorb des zweiten Modes vorerst in eine sogenannte Order-Box weitergewechselt wird, von der aus dann entweder eine Bestellbestätigung erhalten wird oder ein Fehlerhinweise, dass die Bestellung nicht erfolgen konnte.

Zusätzlich ist es von Vorteil, wenn von dem ersten Mode in einen Mode übergewechselt werden kann, der dem Benutzer signalisiert, dass die zu dem ausgewählten Bildelement zugeordnete Information bereits aktiviert wurde, beispielsweise in der Form, dass das dem ausgewählten Bildelement zugeordnete Produkt bereits registriert ist.

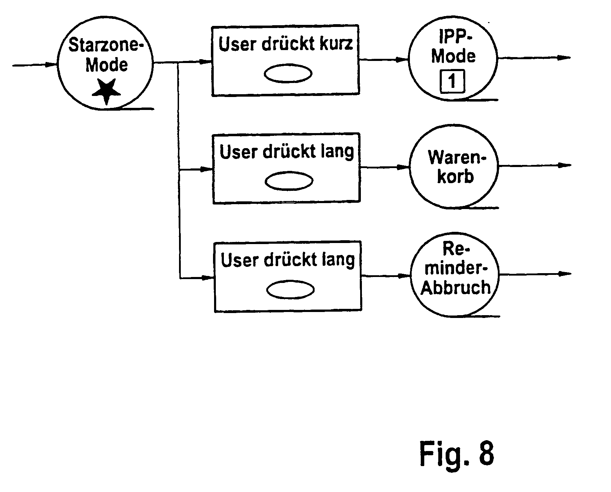

In Fig. 8 sind die Möglichkeiten dargestellt, von dem sogenannten Starzone-Mode in die ersten und zweiten Modi durch unterschiedliche Betätigung von Aktionsmaßnahmen überzuwechseln. Befindet sich das System in dem Starzone-Mode kann beispielsweise durch kurzes Betätigen einer speziellen Taste, beispielsweise einer Taste grün, von dem Starzone-Mode in den IPP-Mode, d. h. ersten Mode, übergewechselt werden. Drückt der Benutzer beispielsweise die gleiche Taste, d. h. Taste grün, länger, so wechselt das System in den Warenkorb über, wie in Fig. 8 dargestellt ist. Im IPP-Mode, d. h. ersten Mode, sind die ausgewählten Bildelemente mit Informationen hinterlegt, wobei ein spezielles Signalelement das jeweilige ausgewählte Bildelement während des laufenden Betriebsmodus bzw. hintereinander ablaufenden Videosequenzen verfolgt. Bei der Verfolgung der Signalelemente mit dem ausgewählten Bildelement können zwei unterschiedliche Varianten herangezogen werden. Bei der ersten Variante klebt das Signalelement am ausgewählten Bildelement und springt somit bei einem Szenenwechsel unterschiedlicher Videosequenzen. Bei einer zweiten Variante wird bei einem Szenenwechsel das Signalelement sanft nachgezogen. Dies bedeutet, dass die Ziffer beim Szenenwechsel durch eine Animation neu auf das ausgewählte Bildelement platziert wird bzw. auf der zum ausgewählten Bildelement voreingestellten Position.

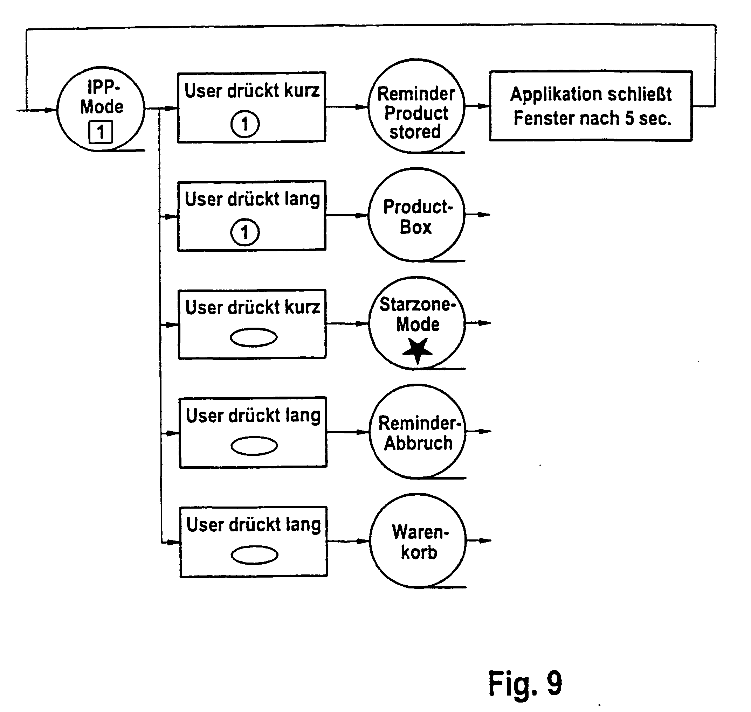

In dem IPP-Mode (siehe Fig. 9) besitzt nunmehr der Benutzer die Möglichkeit, durch entsprechende Betätigung einer zu einem Signalelement zugehörigen Aktionstaste das ausgewählte Bildelement und eine entsprechende Information hierzu in einem separaten Datenspeicher zu speichern. Wünscht der Benutzer beispielsweise detaillierte Informationen zu einem ausgewählten Bildelement, so kann er durch Betätigen einer zu dem ausgewählten Bildelement gehörigen Signalelement zugeordneten Aktionstaste direkt in beispielsweise den dritten Mode, welche eine Product-Box beinhaltet, wechseln. Wünscht der Benutzer den IPP-Mode zu verlassen, so kann er zu einer zu dem Signalelement zugeordneten Aktionstaste unterschiedliche Aktionstaste in den Starzone-Mode zurückkehren. Drückt er beispielsweise diese Aktionstaste länger, so wird das Gesamtsystem abgebrochen. Drückt er eine zu den ebengenannten Aktionstasten unterschiedlichen Aktionstaste, so kann er auch beispielsweise direkt in den zweiten Mode, welcher den Warenkorb beinhaltet, wechseln.

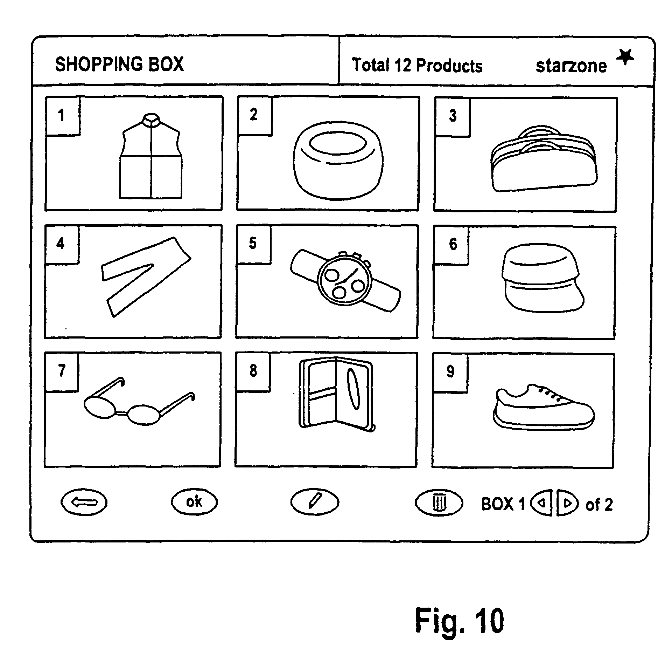

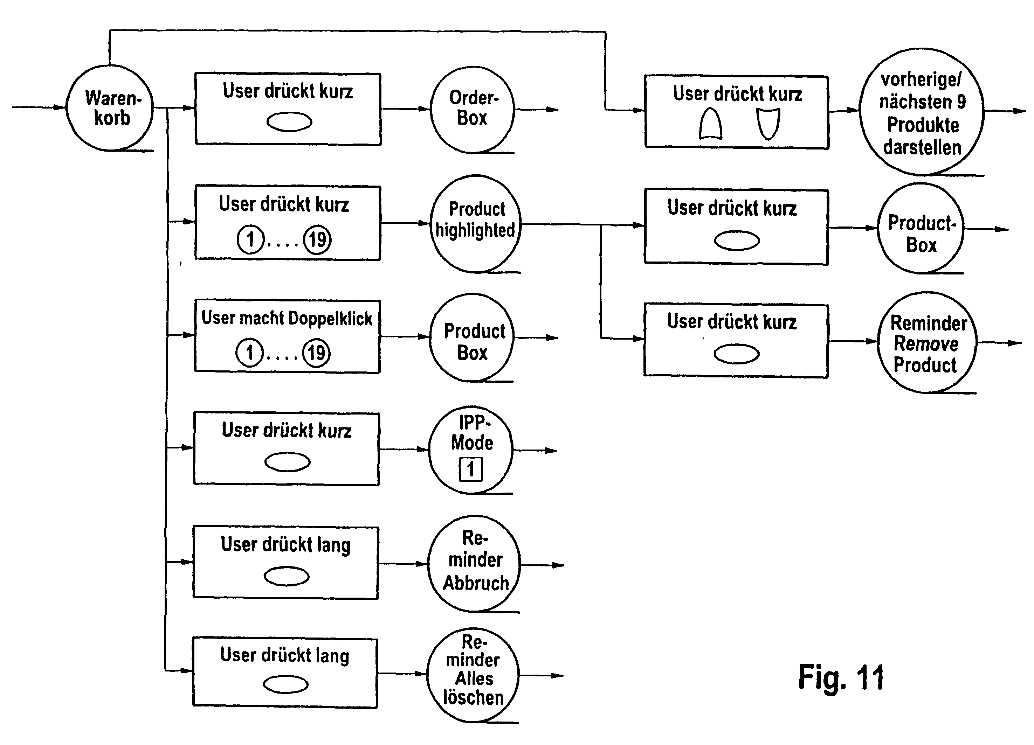

Die Figuren 10 und 11 zeigen zum einen schematisch die unterschiedlichen Möglichkeiten bezüglich den zweiten Modus, welche den Warenkorb beinhaltet, und die Darstellung der ersten Information im Bezug auf die ausgewählten Bildelemente. Ausgehend von Fig. 10 werden in dem sogenannten Warenkorb die in dem IPP-Mode ausgewählten Bildelemente vorzugsweise tabellarisch aufgelistet bzw. angezeigt. Zu jedem ausgewählten Bildelement ist beispielsweise eine Ziffer bzw. ein Buchstabe zugeordnet, welche bzw. welcher der Reihe nach aufgerufen werden können. In diesem Zusammenhang ist hervorzuheben, dass die ausgewählten Bildelemente je nach Status verschieden angezeigt werden können, wobei folgende Zustände unterschieden werden. Erstens diejenigen ausgewählten Bildelemente, bei denen noch keine weiteren Informationen, beispielsweise Bestellangaben wie Größe, etc. eingegeben wurden und zweitens diejenigen ausgewählten Bildelemente, bei denen weitere Informationen wie beispielsweise Bestellangaben eingegeben wurden. Letztere ausgewählte Bildelemente können beispielsweise farbig hervorgehoben werden. Wählt der Benutzer einer die in ausgewählten Bildelementen zugeordneten Nummern, dann wird dieses ausgewählte Bildelement farbig hervorgehoben. Je nach Betätigen der Aktionstaste öffnet sich dann gegebenenfalls die Product-Box des dritten Modes oder aber das ausgewählte Bildelement wird aus dem Warenkorb gelöscht. Diesbezüglich ist es auch möglich, weitere Aktionsmaßnahmen vorzusehen, die beispielsweise die Product-Box öffnet. Drückt der Benutzer beispielsweise zu den eben genannten Aktionstasten eine unterschiedliche Aktionstaste so öffnet sich beispielsweise die Order-Box. Hierbei ist hervorzuheben, dass die Aktionstaste so lange inaktiv bleibt, bis zu dem ausgewählten Bildelement die entsprechenden Informationen vom Benutzer eingetragen wurden. Drückt der Benutzer beispielsweise eine weitere zu den oben Aktionstasten unterschiedliche Aktionstaste kurz, dann wechselt das System zurück in den IPP-Mode. Demgegenüber besteht auch die Möglichkeit, dass durch weitere andere Aktionsmaßnahmen das System abgebrochen wird. Als Sicherungsmaßnahme ist es beispielsweise möglich, eine weitere Aktionstaste vorzusehen, welche gedrückt werden muss, um ausgewählte Bildelemente zu löschen.

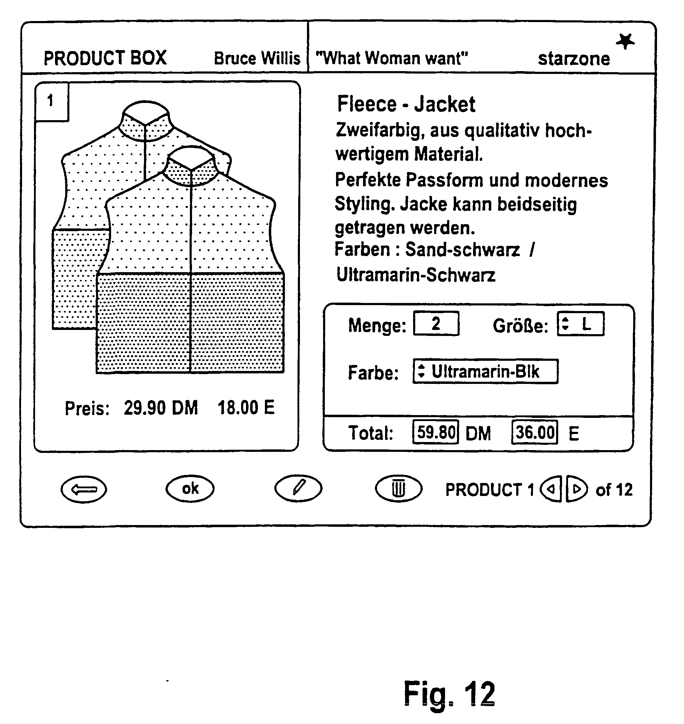

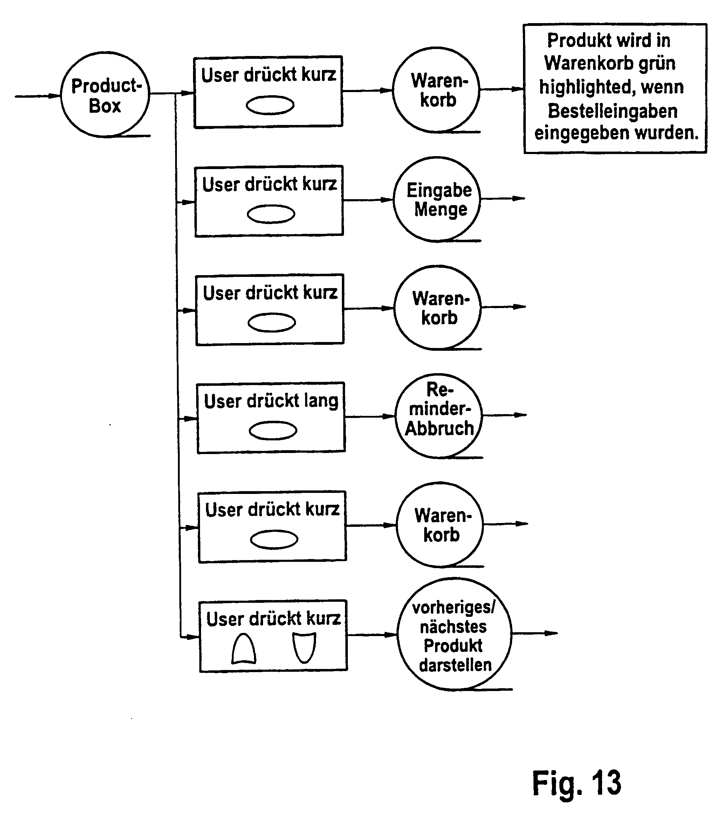

In Fig. 12 ist die der dritten Mode zugeordnete Product-Box dargestellt, wobei in Fig. 13 schematisch die möglichen Aktionseingaben dargestellt werden. Wie in Fig. 12 zu sehen ist, werden in dem dritten Mode zweite detailliertere Informationen zum ausgewählten Bildelement angezeigt. Drückt der Benutzer eine vorgegebene Aktionstaste, kann das entsprechende Eingabefeld farbig hervorgehoben werden, wobei der Benutzer dann die entsprechenden Informationen eingetragen kann. Betätigt der Benutzer eine weitere Aktionstaste, dann kann beispielsweise erneut in den zweiten Mode, welcher den Warenkorb beinhaltet, zurückgesprungen werden und die Bestelleingaben werden übernommen. Drückt der Benutzer eine zu den oben genannten Aktionstasten unterschiedliche Aktionstaste, so kann beispielsweise ebenfalls in den zweiten Mode übergeführt werden, jedoch werden die weiteren Informationen nicht übernommen. Durch Betätigen weiterer Aktionstasten kann beispielsweise der dritte Mode abgebrochen werden oder auch das ausgewählte Bildelement aus dem Warenkorb gemäß zweitem Mode gelöscht werden.

In Fig. 13 sind die weiteren Möglichkeiten dargestellt, wie durch unterschiedliche Aktionstasten die weiteren Informationen eingegeben werden können.

In Fig. 14 ist der Betriebsablauf der Order-Box dargestellt, wobei zuzüglich anzumerken ist, dass die Order-Box mit einem Sicherheitscode betrieben wird, um ein unbeabsichtigtes Aktivieren von Informationen, d. h. Bestellungen zu vermeiden. Ist eine Aktivierung der Information bzw. Bestellung erfolgt, so wird durch eine Bestellbestätigung dem Benutzer signalisiert, dass letztendlich die Interaktivität vorerst abgeschlossen ist.

Grundsätzlich ist ebenso denkbar, jeden einzelnen Verfahrensschritt mit einer Online-Hilfe zu unterstützen.

## Patentansprüche

1. Verfahren zum Anzeigen von Informationen (Ii) zu ausgewählten Bildelementen von Bildern einer Videosequenz (1) mit den Schritten:
a) Empfangen der Videosequenz (1) durch eine Anzeigeeinheit (2), von definierten Informationen (Ii) zu Bildelementen und von Kriterien zur Verknüpfung eines ausgewählten Bildelementes mit den zugehörigen Informationen (Ii);
b) Auswählen eines Bildelementes aus den Bildern der Videosequenz (1), die auf der Anzeigeeinheit (2) angezeigt werden;
c) Anzeigen einer Information (Ii), wenn anhand der Kriterien festgestellt wurde, dass dem ausgewählten Bildelement eine Information (Ii) zugeordnet ist,
**gekennzeichnet durch**
d) Bereitstellen eines zusätzlichen Signalelements zu dem ausgewählten Bildelement, wobei das zusätzliche Signalelement dem ausgewählten Bildelement zugeordnet ist und über das zusätzliche Signalelement die Information angezeigt wird.

2. Verfahren nach Anspruch 1, wobei die Bildkoordinaten (Xi, Yi) der ausgewählten Bildelemente als Kriterium zur Verknüpfung eines ausgewählten Bildelementes mit den zugehörigen Informationen (Ii) dienen, **dadurch gekennzeichnet, dass** eine Zuordnungstabelle zur Zuordnung von Informationen (Ii) zu Bildkoordinaten (Xi, Yi) ausgewählter Bildelemente in den Bildern der Videosequenz (1) erstellt wird und die Daten der Zuordnungstabelle als Kriterium übertragen werden.

3. Verfahren nach Anspruch 2, **gekennzeichnet durch** die Schritte:
- Festlegen einer Zeitspur für die Videosequenz (1);
- Markieren eines Bildbereiches zum Definieren auszuwählender Bildelemente;
- Suchen des Bildelementes in den nachfolgenden Bildern;
- Abspeichern der Bildkoordinaten oder Verschiebungsvektoren der Bildbereiche des Bildelementes in den Bildern der Videosequenz (1), der entsprechenden Zeitinformationen der Zeitspur und der Informationen (Ii) für das Bildelement.

4. Verfahren nach Anspruch 3, **dadurch gekennzeichnet, dass** eine mathematische Näherungsfunktion zur Beschreibung des Verlaufs der Bildkoordinaten (Xi, Yi) eines Bildelementes ermittelt und als Kriterium übertragen wird.

5. Verfahren nach Anspruch 3 oder 4, **dadurch gekennzeichnet, dass** die Zeitinformation der Zeitspur synchron zur Videosequenz (1) und die Bildkoordinaten (Xi, Yi) und zugehörigen Informationen (Ii) asynchron zur Videosequenz (1) übertragen werden.

6. Verfahren nach Anspruch 1, **gekennzeichnet durch** die Schritte:
- Markieren eines auszuwählenden Bildelementes;
- Abspeichern des markierten Bildelementes und einer zugehörigen Information (Ii) als Kriterium;
- Übertragen der Videosequenz (1), der abgespeicherten Bildelemente und der zugehörigen Informationen (Ii) an eine Anzeigeeinheit;
- Überprüfen, ob ein abgespeichertes Bildelement mit einem ausgewählten Bildelement übereinstimmt und Anzeigen der zugehörigen Informationen (Ii).

7. Verfahren nach einem der Ansprüche 3 bis 6, **dadurch gekennzeichnet, dass** das Suchen oder Überprüfen der Bildelemente mit Mustererkennungsverfahren erfolgt.

8. Verfahren nach einem der vorhergehenden Ansprüche, **gekennzeichnet durch** Überlagem eines Fensters über die Videosequenz (1) auf der Anzeigeeinheit (2) zum Anzeigen der Information (Ii).

9. Verfahren nach einem der vorhergehenden Ansprüche, **gekennzeichnet durch** Übertragen von Daten von der Anzeigeeinheit (2) zu einem Zielcomputer (7), nachdem ein Bildelement aus den Bildern der Videosequenz (1) auf der Anzeigeeinheit (2) ausgewählt wurde, wobei die Daten und/oder der Zielcomputer (7) von der Information (Ii) abhängig ist, die zu dem ausgewählten Bildelement gehört.

10. Verfahren nach Anspruch 9, **dadurch gekennzeichnet, dass** die Übertragung der Daten zu dem Zielcomputer (7) über ein Breitbandnetz, über ein Stromnetz oder über ein Telefonnetz oder über ein Funk- und/oder Satellitennetz erfolgt.

11. Verfahren nach einem der vorhergehenden Ansprüche, **dadurch gekennzeichnet, dass** die Kriterien zur Verknüpfung eines ausgewählten Bildelementes mit den zugehörigen Informationen (Ii) in der Austastlücke des Signals der Videosequenz (1) übertragen wird.

12. Verfahren nach einem der Ansprüche 1 bis 10, **dadurch gekennzeichnet, dass** die Kriterien zur Verknüpfung eines ausgewählten Bildelementes mit den zugehörigen Informationen (Ii) in einem definierten Bereich einer als digitaler Videodatenstrom vorliegenden Videosequenz (1) übertragen werden.

13. Verfahren nach einem der Ansprüche 1 bis 12, **dadurch gekennzeichnet, dass** das ausgewählte Bildelement zusätzlich der Anzeigeneinheit übermittelt wird und das Anzeigen der Information über das zusätzliche Bildelement erfolgt.

14. Verfahren nach Anspruch 13, **dadurch gekennzeichnet, dass** das zusätzliche Bildelement in Form einer Iconleiste mit dem das ausgewählte Bildelement enthaltende Bild dargestellt wird.

15. Verfahren nach Anspruch 13 oder 14, **dadurch gekennzeichnet, dass** das zusätzliche Bildelement bei Bedarf in dem das ausgewählte Bildelement enthaltende Bild eingeblendet wird.

16. Verfahren nach einem der Ansprüche 15, **dadurch gekennzeichnet, dass** die Möglichkeit der Einblendung mittels einer separaten Hinweismarkierung auf der Anzeigeeinheit dargestellt wird.

17. Verfahren nach einem der Ansprüche 13 bis 16, **dadurch gekennzeichnet, dass** über das zusätzliche Bildelement festgelegt wird, welches ausgewählte Bildelement markiert werden soll.

18. Verfahren nach einem der Ansprüche 13 bis 17, **dadurch gekennzeichnet, dass** die zusätzlichen Bildelemente der Reihe nach dargestellt werden und die Anzeige der Informationen über eine entsprechende Nummereingabe der aufgereihten zusätzlichen Bildelemente erfolgt.

19. Verfahren nach einem der Ansprüche 1 bis 18, **dadurch gekennzeichnet, dass** das Signalelement jeweils an einem bestimmten Ort zum ausgewählten Bildelement auf der Anzeigeeinheit vorgesehen ist.

20. Verfahren nach einem der Ansprüche 1 bis 19, **dadurch gekennzeichnet, dass** das Signalelement rechts oberhalb zum ausgewählten Bildelement auf der Anzeigeeinheit vorgesehen ist.

21. Verfahren nach Anspruch 20, **dadurch gekennzeichnet, dass** das Signalelement mit einem Hinweiszeichen, vorzugsweise Nummer, versehen ist.

22. Verfahren nach Anspruch 16 und 17 bis 21, wenn abhangig von 16, **dadurch gekennzeichnet, dass** die Hinweismarkierung mit dem Signalelement über eine Verbindungslinie für eine bestimmte Zeit, vorzugsweise 1 Sekunde, verbunden wird.

23. Verfahren nach Anspruch 16 und 17 bis 22, wenn abhängig von 16 **dadurch gekennzeichnet, dass** die Hinweismarkierung nur aktiviert wird, wenn ein ausgewähltes Bildelement in der Videosequenz vorhanden ist.

24. Verfahren nach Anspruch 23, **dadurch gekennzeichnet, dass** die Aktivierung der Hinweismarkierung über eine pulsierende und/oder blinkende Hinweismarkierung dargestellt wird.

25. Verfahren nach einem der Ansprüche 19 bis 24, **dadurch gekennzeichnet, dass** ein erster Mode zum Anzeigen des Signalelements vorgesehen ist.

26. Verfahren nach Anspruch 19 bis 25, **dadurch gekennzeichnet, dass** ein zweiter Mode zum Anzeigen einer ersten Information in Bezug auf die ausgewählten Bildelemente vorgesehen ist.

27. Verfahren nach Anspruch 26, **dadurch gekennzeichnet, dass** im zweiten Mode alle ausgewählten Bildelemente einer zum Zeitpunkt der Aktivierung des zweiten Modes vorhandenen Videosequenz dargestellt werden, wobei die ausgewählten Bildelemente vorzugsweise tabellarisch aufgelistet werden.

28. Verfahren nach Anspruch 27, **dadurch gekennzeichnet, dass** ein dritter Mode vorgesehen ist, mit dem detaillierte zweite Informationen zu dem ausgewählten Bildelement dargestellt werden.

29. Verfahren nach einem der Ansprüche 22 bis 28, **dadurch gekennzeichnet, dass** die Aktivierung des ersten, zweiten und/oder dritten Mode durch zeitlich bedingtes und/oder unterschiedliches Betätigen von Aktionstasten, vorzugsweise einer Funksteuerung, ausgelöst werden.

30. Aufzeichnungsträger mit Informationsdaten (Ii) zu ausgewählten Bildelementen von Bildern einer Videosequenz (1) und mit Kriteriendaten zur Verknüpfung eines ausgewählten Bildelementes mit den zugehörigen Informationen (II) zur Ausführung des Verfahrens nach Anspruch 1 bis 29.

31. Vorrichtung zur Aufbereitung von Videosequenzen (1) zum Ermöglichen, Informationen (II) zu ausgewählten Bildelementen von Bildern der Videosequenzen (1) anzuzeigen,
- eine Wiedergabeeinheit zum Wiedergeben und Anzeigen der Videosequenz (1);
- eine Erfassungseinheit zum Auswählen und Erfassen von Bildelementen von Bildem der Videosequenz (1);
- eine Erkennungseinheit zum Erkennen der ausgewählten Bildelemente in nachfolgenden Bildern der Videosequenz (1) und zum Bestimmen der jeweiligen Bildkoordinaten (Xi, Yi) der Bildelemente;
- eine Aufzeichnungseinheit zum Abspeichern von Informationen (Ii) zu ausgewählten Bildelementen und von Kriterien für die spätere Verknüpfung von Bildkoordinaten (Xi, Yi) ausgewählter Bildelemente mit Informationen,
**gekennzeichnet durch**
- ein Mittel zum Bereitstellen eines zusätzlichen Signalelements zu jedem ausgewählten Bildelement auf der Wiedergabeeinheit, wobei das zusätzliche Signalelement dem ausgewählten Bildelement zugeordnet ist und über das Signalelement die Information angezeigt wird.

32. Vorrichtung nach Anspruch 31, **dadurch gekennzeichnet, dass** die Aufzeichnungseinheit zur Aufzeichnung der Kriterien als Bildkoordinaten (Xi, Yi) in Abhängigkeit von der Zeit ausgebildet ist.

33. Vorrichtung nach Anspruch 32, **dadurch gekennzeichnet, dass** die Aufzeichnungseinheit zur Berechnung und Aufzeichnung von Bewegungsvektoren der erfassten Bildelemente in den Bildern der Videosequenz (1) als Kriterien ausgebildet ist.

34. Vorrichtung nach einem der Ansprüche 31 bis 33, **dadurch gekennzeichnet, dass** das ausgewählte Bildelement zusätzlich der Wiedergabeeinheit übermittelt wird.

35. Vorrichtung nach einem der Ansprüche 31 bis 34, **dadurch gekennzeichnet, dass** eine Iconleiste mit zumindest einem ausgewählten Bildelement vorgesehen ist.

36. Vorrichtung nach einem der Ansprüche 31 bis 35, **dadurch gekennzeichnet, dass** eine Einblendeinrichtung für die Iconleitse und/oder das ausgewählte Bildelement vorgesehen ist.

37. Vorrichtung nach einem der Ansprüche 31 bis 36, **dadurch gekennzeichnet, dass** für jedes Signalelement ein Hinweiszeichen vorgesehen ist.

38. Vorrichtung nach einem der Ansprüche 31 bis 37, **dadurch gekennzeichnet, dass** jedes Signalelement in Form einer Nummer vorgesehen ist.

39. Vorrichtung nach Anspruch 38, **dadurch gekennzeichnet, dass** die Aufzeichnungseinheit zur Berechnung und Aufzeichnung von Bewegungsvektoren der erfassten Bildelemente in den Bildern der Videosequenz (1) als Kriterien ausgebildet ist.

40. Vorrichtung nach einem der Ansprüche 31 bis 39, **dadurch gekennzeichnet, dass** die Aufzeichnungseinheit zur Berechnung und Aufzeichnung einer Näherungsfunktion zur Beschreibung der Bildkoordinaten (Xi, Yi) in Abhängigkeit von der Zeit mit den Parameter der Näherungsfunktion als Kriterien ausgebildet ist.

41. Vorrichtung der einem der Ansprüche 31 bis 40, **dadurch gekennzeichnet, dass** die Erfassungseinheit zum Ausführen von Mustererkennungsverfahren zur Verfolgung eins ausgewählten Bildelementes in den Bildern der Videosequenz (1) ausgebildet ist.

42. Vorrichtung nach einem der Ansprüche 31 bis 39, **gekennzeichnet durch** einen Zielcomputer (7) zum Empfangen von Daten einer entfernten Anzeigeeinheit (2), wenn ein Bildelement an der entfernten Anzeigeeinheit (2) ausgewählt wurde und eine Information (Ii) mit dem Bildelement verknüpft ist.

43. Anzeigeeinheit (2) zum Anzeigen von Informationen (Ii) zu ausgewählten Bildelementen von Bildern einer Videosequenz (1) mit einer Datenverarbeitungseinheit (4), **dadurch gekennzeichnet, dass** die Datenverarbeitungseinheit (4) zum Ausführen des Verfahrens nach einem der Ansprüche 1 bis 29 ausgebildet ist.

## Claims

1. A method for displaying information (Ii) with respect to selected image elements of images of a video sequence (1), comprising the following steps:
a) receiving the video sequence (1) through a display unit (2), receiving defined information (Ii) on image elements, and receiving criteria for linking a selected image element to the associated information (Ii);
b) selecting an image element from the images of the video sequence (1) displayed on the display unit (2);
c) displaying information (Ii), provided the criteria revealed that said information (Ii) is assigned to said selected image element;
**characterized by**
d) providing an additional signal element with respect to the selected image element, wherein said additional signal element is assigned to the selected image element and said additional signal element is used to display said information.

2. A method according to Claim 1, wherein the image coordinates (Xi, Yi) of the selected image elements serve as criteria for linking a selected image element to the associated information (Ii), **characterized in that** an assignment table for assigning information (Ii) to image coordinates (Xi, Yi) of selected image elements is created in the images of the video sequence (1) and that the data of the assignment table is transferred as criteria.

3. A method according to Claim 2, **characterized by** the following steps:
- defining a time track for the video sequence (1);
- choosing an image area for defining image elements to be selected;
- searching the image element in the subsequent images;
- storing the image coordinates or displacement vectors of the image areas of the image element in the images of the video sequence (1), the appropriate time information of the time track and the information (Ii) for the image element.

4. A method according to Claim 3, **characterized in that** a mathematical approximation function for describing the course of the image coordinates (Xi, Yi) of an image element is determined and transferred as criteria.

5. A method according to Claim 3 or 4, **characterized in that** the time information of the time track is transferred synchronously with the video sequence (1) and that the image coordinates (Xi, Yi) and the associated information (Ii) is transferred asynchronously with the video sequence (1).

6. A method according to Claim 1, **characterized by** the following steps:
- choosing an image element to be selected;
- storing the image element chosen and the associated information (Ii) as criteria;
- transferring the video sequence (1), the image elements stored and the associated information (Ii) to a display unit;
- checking whether a stored image element corresponds to a selected image element and displaying the associated information (Ii).

7. A method according to anyone of Claims 3 to 6, **characterized in that** the steps of searching or checking the image elements are carried out with methods of pattern recognition.

8. A method according to anyone of the preceding claims, **characterized in that** a window is superimposed on the video sequence (1) on the display unit (2) for displaying the information (Ii).

9. A method according to anyone of the preceding claims, **characterized in that** data is transferred from the display unit (2) to a destination computer (7) after an image element has been selected from the images of the video sequence (1) on the display unit (2), wherein the data and/or the destination computer (7) depend(s) on the information (Ii) associated with the image element selected.

10. A method according to Claim 9, **characterized in that** the transfer of the data to the destination computer (7) is achieved via a broad-band network, via a power supply network or via a telephone network or via a radio and/or satellite network.

11. A method according to anyone of the preceding claims, **characterized in that** the criteria for linking a selected image element to the associated information (Ii) are transferred in the blanking interval of the signal of the video sequence (1).

12. A method according to anyone of Claims 1 to 10, **characterized in that** the criteria for linking a selected image element to the associated information (Ii) are transferred in a defined range of a video sequence (1) that is provided as a digital video data stream.

13. A method according to anyone of Claims 1 to 12, **characterized in that** the selected image element is, in addition, transmitted to the display unit and the information is displayed via the additional image element.

14. A method according to Claim 13, **characterized in that** the additional image element is faded in in the form of an icon bar providing the image containing the image element selected.

15. A method according to Claim 13 or 14, **characterized in that**, if necessary, the additional image element is inserted in the image containing the selected image element.

16. A method according to anyone of Claims 1 to 15, **characterized in that** the option of the fading in is shown on the display unit by means of a separate reference sign.

17. A method according to anyone of Claims 13 to 16, **characterized in that** the additional image element is used to define the selected image element that is to be chosen.

18. A method according to anyone of Claims 13 to 17, **characterized in that** the additional image elements are shown successively one after the other and that the information is displayed by entering an appropriate number of the successively shown additional image elements.

19. A method according to anyone of Claims 1 to 18, **characterized in that** the signal element is each provided at a specific location in relation to the image element selected on the display unit.

20. A method according to anyone of Claims 1 to 19, **characterized in that** the signal element is provided to the upper right of the image element selected on the display unit.

21. A method according to Claim 20, **characterized in that** the signal element is provided with a reference sign, preferrably a number.

22. A method according to Claims 16 and 17 to 21, if depending on 16, **characterized in that** the reference marking is, via a connection line, connected to the signal element for a specific time interval, preferrably for 1 second.

23. A method according to Claims 16 and 17 to 22, if depending on 16, **characterized in that** the reference marking is activated only if the video sequence contains a selected image element.

24. A method according to Claim 23, **characterized in that** the activation of the reference marking is represented by a pulsating and/or flashing reference marking.

25. A method according to anyone of Claims 19 to 24, **characterized in that** a first mode of displaying the signal element is provided.

26. A method according to Claims 19 to 25, **characterized in that** a second mode of displaying a first information is provided with respect to the selected image elements.

27. A method according to Claim 26, **characterized in that** all of the selected image elements existing at the time of activation of the second mode are displayed in the second mode, wherein the selected image elements are preferrably listed in a table.

28. A method according to Claim 27, **characterized in that** a third mode is provided, which is used to display detailed second information on the selected image element.

29. A method according to anyone of Claims 22 to 28, **characterized in that** the activation of the first, second and/or third mode is triggered by a time-conditioned and/or different actuation of action buttons, preferrably of a radio control.

30. A recording medium with information data (Ii) on selected image elements of images of a video sequence (1) and with criteria data for linking a selected image element to the associated information (Ii) for applying the method according to Claims 1 to 29.

31. A device for preparing video sequences (1) to permit the display of information (Ii) on selected image elements of images of said video sequences (1),
- a reproducing unit for reproducing and displaying the video sequence (1);
- an acquisition unit for selecting and acquiring image elements of images of the video sequence (1);
- a detection unit for detecting the selected image elements in the subsequent images of the video sequence (1) and for determining the particular image coordinates (Xi, Yi) of the image elements;
- a recording unit for storing information (Ii) on selected image elements and of criteria for subsequently linking image coordinates (Xi, Yi) of selected image elements to information;
**characterized by**
- means for providing an additional signal element with respect to each selected image element on the reproducing unit, wherein the additional signal element is assigned to the image element selected and the information is displayed via the signal element.

32. A device according to Claim 31, **characterized in that** the recording unit is designed for recording the criteria as image coordinates (Xi, Yi) in relation to time.

33. A device according to Claim 32, **characterized in that** the recording unit is designed for calculating and recording motion vectors of the acquired image elements in the images of the video sequence (1) as criteria.

34. A device according to anyone of Claims 31 to 33, **characterized in that** the selected image element is, in addition, transmitted to the reproducing unit.

35. A device according to anyone of Claims 31 to 34, **characterized in that** an icon bar with at least one selected image element is provided.

36. A device according to anyone of Claims 31 to 35, **characterized in that** an fading in unit for the icon bar and/or the image element selected is provided.

37. A device according to anyone of Claims 31 to 36, **characterized in that** a reference sign is provided for each signal element.

38. A device according to anyone of Claims 31 to 37, **characterized in that** each signal element is provided in the form of a number.

39. A device according to Claim 38, **characterized in that** the recording unit is designed for calculating and recording motion vectors of the acquired image elements in the images of the video sequence (1) as criteria.

40. A device according to anyone of Claims 31 to 39, **characterized in that** the recording unit is designed for calculating and recording an approximation function for describing the image coordinates (Xi, Yi) in relation to time with the parameters of the approximation function as criteria.

41. A device according to anyone of Claims 31 to 40, **characterized in that** the acquisition unit is designed for applying methods of pattern recognition for tracking a selected image element in the images of the video sequence (1).

42. A device according to anyone of Claims 31 to 39, **characterized by** a destination computer (7) for receiving data from a remote display unit (2), if an image element has been selected from the remote display unit (2) and information (Ii) is linked to the image element.

43. A display unit (2) for displaying information (Ii) with respect to selected image elements of images of a video sequence (1) with a data processing unit (4), **characterized in that** the data processing unit (4) is designed for applying the method according to anyone of Claims 1 to 29.

## Revendications

1. Procédé d'affichage d'informations (Ii) sur des éléments d'image sélectionnés dans des images d'une séquence vidéo (1) comprenant les étapes suivantes :
a) réception de la séquence vidéo (1) par une unité d'affichage (2), d'informations définies (Ii) sur des éléments d'image et de critères pour la combinaison d'un élément d'image sélectionné aux informations correspondantes (Ii) ;
b) sélection d'un élément d'image des images de la séquence vidéo (1), affichées sur l'unité d'affichage (2) ;
c) affichage d'une information (Ii), lorsqu'il a été établi à l'aide des critères qu'une information (Ii) est associée à l'élément d'image sélectionné,
**caractérisé en ce que**
d) la fourniture d'un élément de signal supplémentaire sur l'élément d'image sélectionné, l'élément de signal supplémentaire étant associé à l'élément d'image sélectionné et l'information étant affichée par l'intermédiaire de l'élément de signal supplémentaire.

2. Procédé suivant la revendication 1, les coordonnées d'image (Xi, Yi) des éléments d'image sélectionnés servant de critère pour la combinaison d'un élément d'image sélectionné aux informations correspondantes (Ii), **caractérisé en ce qu'**une liste des correspondances est élaborée pour l'association d'informations (Ii) aux coordonnées d'image (Xi, Yi) d'éléments d'image sélectionnés dans les images de la séquence vidéo (1) et les données de la liste des correspondances sont transmises en tant que critère.

3. Procédé suivant la revendication 2, **caractérisé par** les étapes suivantes :
- fixation d'une piste de temps pour la séquence vidéo (1) ;
- marquage d'une zone d'image pour la définition des éléments d'image à sélectionner ;
- recherche de l'élément d'image dans les images suivantes ;
- mémorisation des coordonnées d'image ou des vecteurs de déplacement des zones de l'élément d'image dans les images de la séquence vidéo (1), des informations correspondantes de la piste de temps et des informations (Ii) pour l'élément d'image.

4. Procédé suivant la revendication 3, **caractérisé en ce qu'**une fonction mathématique approchée est déterminée pour la description de l'allure des coordonnées d'image (Xi, Yi) d'un élément d'image et est transmise en tant que critère.

5. Procédé suivant l'une des revendications 3 et 4, **caractérisé en ce que** l'information de la piste de temps est transmise de manière synchrone avec la séquence vidéo (1) et les coordonnées d'image (Xi, Yi) et des informations correspondantes (Ii) sont transmises de manière asynchrone avec la séquence vidéo (1).

6. Procédé suivant la revendication 1, **caractérisé par** les étapes suivantes :
- marquage d'un élément d'image à sélectionner,
- mémorisation de l'élément d'image marqué et d'une information correspondante (Ii) en tant que critère ;
- transmission de la séquence vidéo (1), des éléments d'image mémorisés et des informations correspondantes (Ii) à une unité d'affichage ;
- vérification qu'un élément d'image mémorisé coïncide avec un élément d'image sélectionné et affichage des informations correspondantes (Ii).

7. Procédé suivant l'une des revendications 3 à 6, **caractérisé en ce que** la recherche ou la vérification des éléments d'image est assurée par un procédé de reconnaissance des formes.

8. Procédé suivant l'une des revendications précédentes, **caractérisé par** la superposition d'une fenêtre sur la séquence vidéo (1) pour l'affichage de l'information (Ii) sur l'unité d'affichage (2).

9. Procédé suivant l'une des revendications précédentes,
**caractérisé par** la transmission de données de l'unité d'affichage (2) à un ordinateur cible (7), après qu'un élément d'image des images de la séquence vidéo (1) ait été sélectionné sur l'unité d'affichage (2), les données et/ou l'ordinateur cible (7) dépendant de l'information (Ii) correspondant à l'élément d'image sélectionné.

10. Procédé suivant la revendication 9, **caractérisé en ce que** la transmission des données à l'ordinateur cible (7) s'effectue par un réseau à large bande, par un réseau électrique, par un réseau téléphonique ou par un réseau de stations de radio et/ou satellite.

11. Procédé suivant l'une des revendications précédentes, **caractérisé en ce que** les critères pour la combinaison d'un élément d'image sélectionné aux informations correspondantes (Ii) sont transmis dans l'intervalle de suppression du signal de la séquence vidéo (1).

12. Procédé suivant l'une des revendications 1 à 10, **caractérisé en ce que** les critères pour la combinaison d'un élément d'image sélectionné aux informations correspondantes (Ii) sont transmis dans une zone définie d'une séquence vidéo (1) disponible sous forme de flux de données vidéo numérique.

13. Procédé suivant l'une des revendications 1 à 12, **caractérisé en ce que** l'élément d'image sélectionné est transmis en supplément à l'unité d'affichage et l'affichage de l'information s'effectue par l'élément d'image supplémentaire.

14. Procédé suivant la revendication 13, **caractérisé en ce que** l'élément d'image supplémentaire est représenté en forme d'une barre d'icônes avec l'image contenant l'élément d'image sélectionné.

15. Procédé suivant l'une des revendications 13 et 14, **caractérisé en ce que** l'élément d'image supplémentaire est en cas de besoin affiché à l'écran dans l'image contenant l'élément d'image sélectionné.

16. Procédé suivant l'une des revendications 1 à 15, **caractérisé en ce que** la possibilité d'affichage à l'écran est représentée au moyen d'un indicateur séparé sur l'unité d'affichage.

17. Procédé suivant l'une des revendications 13 à 16, **caractérisé en ce qu'**il est établi par l'élément d'image supplémentaire l'élément d'image sélectionné à repérer.

18. Procédé suivant l'une des revendications 13 à 17, **caractérisé en ce que** les éléments d'image supplémentaires sont représentés les uns après les autres et l'affichage des informations s'effectue par une introduction correspondante des numéros des éléments d'image supplémentaires enchaînés.

19. Procédé suivant l'une des revendications 1 à 18, **caractérisé en ce que** l'élément de signal est prévu en un endroit défini pour chaque élément d'image sélectionné sur l'unité d'affichage.

20. Procédé suivant l'une des revendications 1 à 19, **caractérisé en ce que** l'élément de signal est prévu à droite au-dessus de l'élément d'image sélectionné sur l'unité d'affichage.

21. Procédé suivant la revendication 20, **caractérisé en ce que** l'élément de signal est muni d'un symbole, de préférence d'un numéro.

22. Procédé suivant les revendications 16 et 17 à 21, si elles dépendent de la revendication 16, **caractérisé en ce que** l'indicateur est relié à l'élément de signal par une ligne de jonction pour un temps défini, de préférence 1 seconde.

23. Procédé suivant les revendications 16 et 17 à 22, si elles dépendent de la revendication 16, **caractérisé en ce que** l'indicateur n'est activé que lorsqu'un élément d'image sélectionné est disponible dans la séquence vidéo.

24. Procédé suivant la revendication 23, **caractérisé en ce que** l'activation de l'indicateur est représentée par un indicateur pulsatoire et/ou clignotant.

25. Procédé suivant l'une des revendications 19 à 24, **caractérisé en ce qu'**un premier mode est prévu pour l'affichage de l'élément de signal.

26. Procédé suivant les revendications 19 à 25, **caractérisé en ce qu'**un deuxième mode est prévu pour l'affichage d'une première information rapportée aux éléments d'image sélectionnés.

27. Procédé suivant la revendication 26, **caractérisé en ce que**, dans le deuxième mode, tous les éléments d'image sélectionnés d'une séquence vidéo disponible à l'instant de l'activation du deuxième mode sont représentés, les éléments d'image sélectionnés étant de préférence listés sous forme de table.

28. Procédé suivant la revendication 27, **caractérisé en ce qu'**il est prévu un troisième mode par lequel sont représentées des deuxièmes informations détaillées sur l'élément d'image sélectionné.

29. Procédé suivant l'une des revendications 22 à 28, **caractérisé en ce que** l'activation du premier, du deuxième et/ou du troisième mode est déclenchée par l'actionnement dans le temps et/ou différent de touches d'activation, de préférence d'une télécommande par radio.

30. Support d'enregistrement avec des données d'informations (Ii) sur des éléments d'image sélectionnés dans des images d'une séquence vidéo (1) et avec des données de critère pour la combinaison d'un élément d'image sélectionné aux informations correspondantes (II) pour la mise en oeuvre du procédé suivant les revendications 1 à 29.

31. Dispositif de traitement de séquences vidéo (1) pour permettre d'afficher des informations (II) sur des éléments d'image sélectionnés d'images des séquences vidéo (1), comprenant
- une unité de reproduction pour la reproduction et l'affichage de la séquence vidéo (1) ;
- une unité de saisie pour la sélection et la saisie d'éléments d'image d'images de la séquence vidéo (1) ;
- une unité d'identification pour identifier des éléments d'image sélectionnés dans les images suivantes de la séquence vidéo (1) et pour définir les coordonnées d'image respectives (Xi, Yi) des éléments d'image ;
- une unité d'enregistrement pour mémoriser des informations (Ii) sur des éléments d'image sélectionnés et des critères pour la combinaison ultérieure de coordonnées d'image (Xi, Yi) d'éléments d'image sélectionnés aux informations,
**caractérisé par**
- un moyen de fourniture d'un élément de signal supplémentaire pour chaque élément d'image sélectionné sur l'unité de reproduction, l'élément de signal supplémentaire étant associé à l'élément d'image sélectionné et l'information étant affichée par l'intermédiaire de l'élément de signal.

32. Dispositif suivant la revendication 31, **caractérisé en ce que** l'unité d'enregistrement est réalisée pour l'enregistrement des critères sous forme de coordonnées d'image (Xi, Yi) en fonction du temps.

33. Dispositif suivant la revendication 32, **caractérisé en ce que** l'unité d'enregistrement est réalisée pour le calcul et l'enregistrement de vecteurs de déplacement des éléments d'image saisis dans les images de la séquence vidéo (1) en tant que critères.

34. Dispositif suivant l'une des revendications 31 à 33, **caractérisé en ce que** l'élément d'image sélectionné est transmis en supplément à l'unité de reproduction.

35. Dispositif suivant l'une des revendications 31 à 34, **caractérisé en ce qu'**il est prévu une barre d'icônes avec au moins un élément d'image sélectionné.

36. Dispositif suivant l'une des revendications 31 à 35, **caractérisé en ce qu'**il est prévu un dispositif d'affichage à l'écran pour la barre d'icônes et/ou l'élément d'image sélectionné.

37. Dispositif suivant l'une des revendications 31 à 36, **caractérisé en ce qu'**un symbole est prévu pour chaque élément de signal.

38. Dispositif suivant l'une des revendications 31 à 37, **caractérisé en ce que** chaque élément de signal et prévu en forme d'un numéro.

39. Dispositif suivant la revendication 38, **caractérisé en ce que** l'unité d'enregistrement est réalisée pour le calcul et l'enregistrement de vecteurs de déplacement des éléments d'image saisis dans les images de la séquence vidéo (1) en tant que critères.

40. Dispositif suivant l'une des revendications 31 à 39, **caractérisé en ce que** l'unité d'enregistrement est réalisée pour le calcul et l'enregistrement d'une fonction approchée pour la description des cordonnées d'image (Xi, Yi) en fonction du temps avec les paramètres de la fonction approchée en tant que critères.

41. Dispositif suivant l'une des revendications 31 à 40, **caractérisé en ce que** l'unité de saisie est réalisée pour l'exécution du procédé de reconnaissance des formes pour la poursuite d'un élément d'image sélectionné dans les images de la séquence vidéo (1).

42. Dispositif suivant l'une des revendications 31 à 39, **caractérisé par** un ordinateur cible (7) pour la réception de données d'une unité d'affichage distante (2), lorsqu'un élément d'image a été sélectionné sur l'unité d'affichage distante (2) et une information (Ii) est combinée à l'élément d'image.

43. Unité d'affichage (2) pour l'affichage d'informations (Ii) sur des éléments d'image sélectionnés d'images d'une séquence vidéo (1) comprenant une unité de traitement de données (4), **caractérisée en ce que** l'unité de traitement des données (4) est réalisée pour l'exécution du procédé suivant l'une des revendications 1 à 29.
